# EUROPEAN PATENT APPLICATION

(11) **EP 4 797 707 A1**
(43) Date of publication of application: **26.08.2026**
(21) Application number: 24879085.9
(22) Date of filing: 17.10.2024
(51) Int. Cl.: H04N 21/435

(54) **VIDEO GENERATION METHOD AND DEVICE, AND STORAGE MEDIUM**

(30) Priority: 17.10.2023 CN 202311346772
(71) Applicant: Beijing Zitiao Network Technology Co., Ltd., Beijing 100190 (CN); Lemon Inc., Grand Cayman, KY1-1205 (KY)
(72) Inventor: GONG, Weibo, Beijing 100028 (CN); ZHANG, Bowen, Beijing 100028 (CN); WANG, Yufei, Los Angeles California 90066 (US); CHEN, Fan, Los Angeles California 90066 (US)
(74) Representative: Marks & Clerk LLP
(86) International application number: PCT/CN2024/125532
(87) International publication number: WO 2025/082445

(57) **Abstract**

Embodiments of the present disclosure provide a video generation method and device, and a storage medium. The method comprises: acquiring a video script, and acquiring text features of the video script; acquiring video features of each video material among a plurality of video materials; acquiring a similarity matrix between the text features and the video features; matching the video material with the video script on the basis of the similarity matrix to obtain a video material sequence; and generating a target video file on the basis of the video material sequence. In the embodiments of the present disclosure, retrieval and sorting of the video materials are implemented by means of the matching between the video script and the video materials, and then video packaging is carried out on the basis of the video material sequence, thereby better achieving automated editing and production of videos.

## Description

The present application claims priority to Chinese Patent Application No. 202311346772.6, filed on October 17, 2023, which is incorporated herein by reference in its entirety as a part of the present application.

### TECHNICAL FIELD

Embodiments of the present disclosure relate to a video generation method and apparatus, and a storage medium.

### BACKGROUND

With the development of network technologies and the improvement of hardware performance of terminal apparatuses, there is an increasing demand for video creation and video editing on the terminal apparatuses. To lower the barrier for video creation and facilitate quick production of video works by users, automatic video generation functions have emerged.

Some existing automatic video generation functions typically require the users to upload video materials, and then automatically perform packaging processes such as adding of music, effects, and transitions on the video materials. However, the existing automatic video generation functions can only implement the simple packaging processes described above, and cannot implement more complex automatic editing and production.

### SUMMARY

Embodiments of the present disclosure provide a video generation method and apparatus, and a storage medium, to better implement automatic editing and production of videos.

According to a first aspect, an embodiment of the present disclosure provides a video generation method. The method includes:
obtaining a video script, and obtaining a text feature of the video script;
obtaining a video feature of each of a plurality of video materials;
obtaining a similarity matrix between the text feature and the video feature;
performing matching between the video material and the video script based on the similarity matrix, to obtain a video material sequence; and
generating a target video file based on the video material sequence.

According to a second aspect, an embodiment of the present disclosure provides a video generation apparatus. The apparatus includes:
a script obtaining unit configured to obtain a video script;
a text encoding unit configured to obtain a text feature of the video script;
a video encoding unit configured to obtain a video feature of each of a plurality of video materials;
a matching unit configured to obtain a similarity matrix between the text feature and the video feature, and perform matching between the video material and the video script based on the similarity matrix, to obtain a video material sequence; and
a video packaging unit configured to generate a target video file based on the video material sequence.

According to a third aspect, an embodiment of the present disclosure provides an electronic apparatus. The electronic device includes: at least one processor and a memory, where the memory stores computer-executable instructions; and
the at least one processor executes the computer-executable instructions stored in the memory, to cause the at least one processor to perform the video generation method according to the first aspect and various possible designs of the first aspect.

According to a fourth aspect, an embodiment of the present disclosure provides a computer-readable storage medium storing computer-executable instructions that, when executed by a processor, cause the video generation method according to the first aspect and various possible designs of the first aspect to be implemented.

According to a fifth aspect, an embodiment of the present disclosure provides a computer program product, including computer-executable instructions that, when executed by a processor, cause the video generation method according to the first aspect and various possible designs of the first aspect to be implemented.

### BRIEF DESCRIPTION OF DRAWINGS

In order to describe the technical solutions in embodiments of the present disclosure or in the related art more clearly, the accompanying drawings for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
Fig. 1 is an exemplary diagram of a scenario of a video generation method according to an embodiment of the present disclosure;
Fig. 2 is a schematic flowchart of a video generation method according to an embodiment of the present disclosure;
Fig. 3 is a schematic diagram of a script library according to an embodiment of the present disclosure;
Fig. 4 is a structural block diagram of a video generation apparatus according to an embodiment of the present disclosure; and
Fig. 5 is a schematic structural diagram of hardware of an electronic apparatus according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative efforts shall fall within the scope of protection of the present disclosure.

Some existing automatic video generation functions typically require users to upload video materials, and then automatically perform packaging processes such as adding of music, effects, and transitions on the video materials. However, the existing automatic video generation functions can only implement the simple packaging processes described above, and cannot implement more complex automatic editing and production, especially retrieval and sorting of the video materials. Generally, the video materials need to be retrieved and sorted manually, which leads to a huge workload and lengthy time consumption when there are many video materials.

To solve the above-mentioned technical problem, the present disclosure provides a video generation method. The method includes: obtaining a video script, and obtaining a text feature of the video script; obtaining a video feature of each of a plurality of video materials; obtaining a similarity matrix between the text feature and the video feature; performing matching between the video material and the video script based on the similarity matrix, to obtain a video material sequence; and generating a target video file based on the video material sequence. In this embodiment, retrieval and sorting of the video materials are implemented through matching between the video script and the video materials, and then video packaging is performed based on the video material sequence, so as to better implement automatic editing and production of videos.

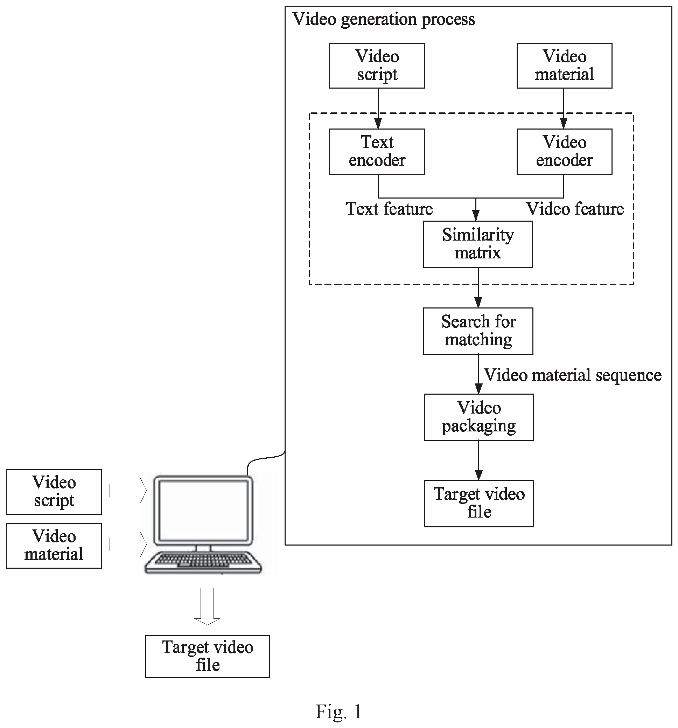

The video generation method provided in the present disclosure is applicable to an electronic apparatus such as a terminal apparatus or a server. As shown in Fig. 1, the terminal apparatus is used as an example. The terminal apparatus may obtain a video script and a video material, then obtain a text feature of the video script and a video feature of the video material, and obtain a similarity matrix between the text feature and the video feature; perform matching between the video material and the video script based on the similarity matrix, to obtain a video material sequence; and generate a target video file based on the video material sequence.

The video generation method of the present disclosure is described in detail below with reference to specific embodiments.

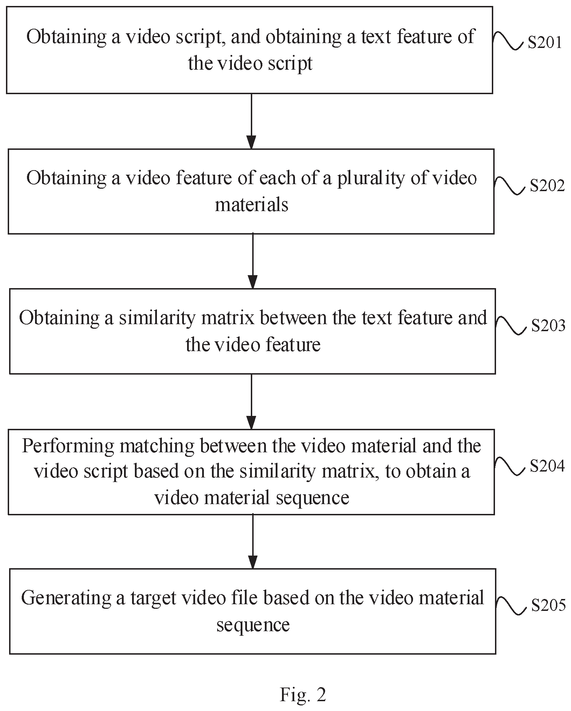

Reference is made to Fig. 2. Fig. 2 is a schematic flowchart of a video generation method according to an embodiment of the present disclosure. The method in this embodiment may be applied to an electronic apparatus such as a terminal apparatus or a server. The video generation method includes the following steps.

S201: Obtaining a video script, and obtaining a text feature of the video script.

In this embodiment, the video script may include a set of plots or actions (for example, a delicious food-related video script may include adding of oil, adding of ingredients, cooking processes, etc., and for another example, a travel-related video script may include travel events, etc.). More specifically, the video script may include shots, camera movement manners, lines, etc.

Optionally, a user may input text data of a video script with an expected editing effect, and the electronic apparatus receives the text data of the video script input by the user, and obtains the video script based on the text data of the video script.

Optionally, a user may input one or more reference videos, and the electronic apparatus receives the reference video input by the user, obtains description information of the reference video, and obtains the video script based on the description information of the reference video. Optionally, when the description information of the reference video is obtained, the reference video may be sliced to obtain a plurality of video segments, where each video segment may be one plot, one action, etc. Then, description information of each video segment is obtained by using a video description model. The video description model may be a machine learning model or any other model capable of implementing a video description function. The reference video may alternatively be sliced by using a machine learning model or any other model capable of implementing a video slicing function.

Certainly, the video script may alternatively be obtained by combining the above-mentioned two solutions or in other ways, and this is not limited herein.

The above-mentioned video script may be a structured video script, that is, each video script uses a same structure, for example, includes shots, camera movement manners, lines, etc.

After the video script is obtained, the video script may be encoded to obtain the text feature of the video script. Optionally, the video script may be encoded by using a text encoder, to obtain the text feature (feature vector) of the video script. The text encoder may use any model or algorithm capable of implementing text feature extraction, such as a text encoder of a transformer model, or a text encoder in a CLIP model. This is not limited herein.

S202: Obtaining a video feature of each of a plurality of video materials.

In this embodiment, the user may input the plurality of video materials, and for each of the plurality of video materials, the video feature (feature vector) may be extracted.

Optionally, when the video feature of any video material is obtained, for the any video material, a plurality of video frames may be extracted, for example, key frames are extracted, or frames are extracted at an equal interval. Then, the video frames are encoded by using a video encoder, to obtain the feature of each video frame, and average pooling is performed on the feature of each video frame to obtain the video feature of the video material. The video encoder may use any model or algorithm capable of implementing video feature extraction, such as a video encoder (Vision Transformer) in the CLIP model. This is not limited herein.

Optionally, the text feature of the video script and the video feature of the video material may be obtained by using the text encoder and the video encoder in the same CLIP model respectively. Therefore, the above-mentioned text encoding and video encoding can be implemented with only one model, to obtain the text feature of the video script and the video feature of the video material more efficiently.

In addition, it should be noted that an execution sequence of S201 and S202 may not be limited, and they may be performed simultaneously or sequentially.

S203: Obtaining a similarity matrix between the text feature and the video feature.

In this embodiment, a similarity between a text feature of each video script and the video feature of each video material may be obtained to construct the similarity matrix. If there are M video scripts and N video materials, the similarity matrix is an M × N matrix. The similarity may be a cosine similarity or another similarity.

Optionally, in order to better implement matching between the video script and the video material, in this embodiment, at least two of the following similarities between a text feature of any video script and the video feature of any video material are obtained:

a similarity between the text feature of the video script and the video feature of the video material, a similarity between the video feature of the video material and each word of the video script, a similarity between the text feature of the video script and the feature of each video frame of the video material, an average value of a maximum similarity between each video frame of the video material and words of the video script, and an average value of a maximum similarity between each word of the video script and the video frames of the video material.

Weighted summation is performed on the at least two similarities to obtain a similarity between the text feature of the any video script and the video feature of the any video material. After a similarity between the text feature of each video script and the video feature of each video material is obtained, the similarity matrix may be constructed.

For the average value of the maximum similarity between each video frame of the video material and the words of the video script, for the any video material, similarities between a video frame of the video material and words of a video script are obtained, and a maximum similarity is extracted from the similarities as a maximum similarity between the video frame and the words of the video script; similarly, a maximum similarity between each of the other frames of the video material and the words of the video script is also obtained; and then these maximum similarities are averaged. For the average value of the maximum similarity between each word of the video script and the video frames of the video material, for the any video script, similarities between a word of the video script and video frames of a video material are obtained, and a maximum similarity is extracted from the similarities as a maximum similarity between the word and the video frames of the video material; similarly, a maximum similarity between another word of the video script and the video frames of the video material is also obtained; and then these maximum similarities are averaged.

S204: Performing matching between the video material and the video script based on the similarity matrix, to obtain a video material sequence.

In this embodiment, matching may be performed between the video material and the video script based on the similarity matrix, during matching a beam search algorithm or a greedy algorithm may be used, so as to obtain video material sequences matched with video scripts one to one.

The beam search algorithm is used as an example, and a beam size (replaced by bs in this embodiment) may be specified beforehand. During searching for a video material matched with any video script, a total score (total similarity) of a new video sequence obtained by adding each candidate video material to a current existing video material sequence is obtained, and bs new video material sequences with highest total scores are retained. Next, during searching for a video material matched with a next video script, searching is performed separately on the basis of the bs new video material sequences retained in the previous step, and then bs new video material sequences with highest total scores are retained. This step is cyclically performed until matching is finished. Finally, bs video material sequences are obtained, and one video material sequence with a highest total score is extracted from the bs video material sequences as a final video material sequence.

S205: Generating a target video file based on the video material sequence.

In this embodiment, after the video material sequences matched with the video scripts one to one are obtained, video packaging may be performed on the video material sequence, especially including but not limited to adding music, effects, transitions, animations, texts, etc., to generate an edited and rendered target video file, so as to implement automatic video editing (AutoCut).

Optionally, at least one of the following may be added to the video material sequence by using a preset video packaging model: music, an effect, a transition, an animation, or a text, to generate the target video file, where the preset video packaging model may be any model or algorithm capable of implementing adding of the music, the effect, the transition, the animation, or the text. Alternatively, a video template is obtained for the video material sequence, and video packaging is performed on the video material sequence based on the video template, to generate the target video file, where the video template may be a combination of a series of effects, which may include adding music, an effect, a transition, an animation, a text, etc. The video template is adapted to the video material sequence, so that the series of effects in the video template are applied to the video material sequence.

The video generation method provided in this embodiment includes: obtaining the video script, and obtaining the text feature of the video script; obtaining the video feature of each of the plurality of video materials; obtaining the similarity matrix between the text feature and the video feature; performing matching between the video material and the video script based on the similarity matrix, to obtain the video material sequence; and generating the target video file based on the video material sequence. In this embodiment, retrieval and sorting of the video materials are implemented through matching between the video script and the video material, and then video packaging is performed based on the video material sequence, so as to better implement automatic editing and production of videos.

On the basis of any one of the above-mentioned embodiments, obtaining the video script based on the text data of the video script and/or the description information of the reference video may specifically include the following manners.

Manner 1: Performing sentence splitting on the text data of the video script and/or the description information of the reference video to obtain a plurality of sentences, and determining each sentence as the video script.

Sentence splitting may be first performed on the text data of the video script and/or the description information of the reference video to obtain the plurality of sentences, where each sentence may include one complete action or a part of complete content. Considering that each sentence may be relatively detailed, each sentence may be determined as one video script.

Manner 2: Performing sentence splitting on the text data of the video script and/or the description information of the reference video to obtain a plurality of sentences, retrieving a preset video script related to each sentence from a preset script library, and determining the preset video script as the video script.

The plurality of sentences obtained through sentence splitting may also be inadequately detailed or complete, so that the video script may be obtained by combining the preset script library, where the preset script library may include a plurality of preset video scripts. In this manner, matching may be performed between each sentence obtained through sentence splitting and the preset script library to retrieve the preset video script matched with each sentence from the preset script library, and the preset video scripts may be determined as video scripts.

Manner 3: Performing sentence splitting on the text data of the video script and/or the description information of the reference video to obtain a plurality of sentences, retrieving a preset video script related to each sentence from a preset script library in response to the number of the sentences being less than a preset value, and determining the sentence and the preset video script as the video script.

The number of the sentences obtained through sentence splitting may be small. If the number of the sentences is less than the preset value, the preset video scripts related to each sentence may be retrieved from the preset script library, and the sentences and the preset video scripts are determined as video scripts, thereby implementing extension of the sentences, or only the preset video scripts may be determined as video scripts.

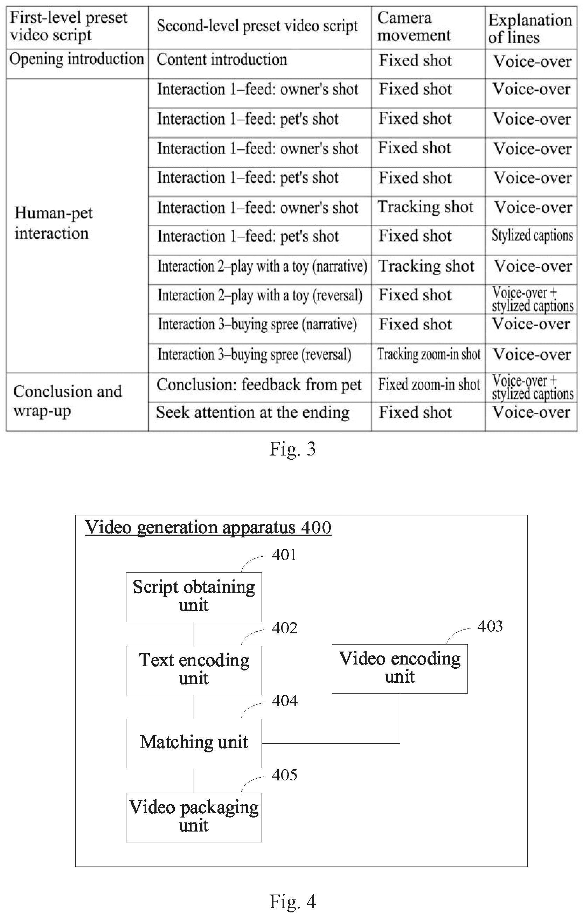

On the basis of the above-mentioned embodiments, the preset script library includes a first-level preset video script and a second-level preset video script, where the first-level preset video script is associated with at least one second-level preset video script. The second-level preset video script is a finer-grained video script based on the first-level preset video script. For example, the preset script library shown in Fig. 3 includes some preset video scripts of videos related to "buying things for cat raising", where the first-level preset video script is human-pet interaction, and the second-level preset video script includes fine-grained video scripts of various types of human-pet interaction actions. Certainly, the preset script library may further include a finer-grained third-level preset video script, a finer-grained fourth-level preset video script, etc. This is not limited herein.

Further, in the above-mentioned embodiments, when the preset video script related to each sentence is retrieved from the preset script library, a target first-level preset video script related to each sentence may be retrieved from the preset script library, a target second-level preset video script associated with the target first-level preset video script is obtained, and the target first-level preset video script and the target second-level preset video script are determined as the preset video script related to each sentence. Certainly, the target second-level preset video script may be directly determined as the preset video script related to each sentence (only the target second-level preset video script is encoded during text encoding).

Optionally, retrieving the preset video script related to each sentence from the preset script library includes:
encoding the sentence by using the text encoder, to obtain a text feature of the sentence;
encoding a preset video script in the preset script library by using the text encoder, to obtain a text feature of the preset video script; and
determining, based on the text feature of the sentence and the text feature of the preset video script, the preset video script related to the sentence.

In this embodiment, each sentence may be encoded by using the text encoder, to obtain the text feature of each sentence. Similarly, the preset video script in the preset script library is encoded by using the text encoder, to obtain the text feature of the preset video script. Then, similarity matching is performed between the text feature of the sentence and the text feature of the preset video script to obtain a preset video script with a highest similarity to each sentence. In a case where the preset script library includes the first-level preset video script and the second-level preset video script, only the first-level preset video script is encoded to obtain a text feature of the first-level preset video script, and thus similarity matching needs to be performed only between the text feature of the sentence and the text feature of the first-level preset video script.

On the basis of any one of the above-mentioned embodiments, when the video material sequence matched with the video script is obtained by using the beam search algorithm, there is a time sequence for some particular scenarios, such as a tourism scenario and a cooking scenario, so that a time constraint may be added during execution of the beam search algorithm, specifically as follows:
during determining of each video material in the video material sequence by using the beam search algorithm, comparing shooting time of a candidate video material with shooting time of a previous video material in the video material sequence; and
in response to shooting time of any candidate video material being prior to the shooting time of the previous video material in the video material sequence, lowering a score of the candidate video material.

In this embodiment, during searching for the video material matched with any video script by using the beam search algorithm, a total score (total similarity) of a new video sequence obtained by adding any candidate video material to a current existing video material sequence is obtained, and if shooting time of the candidate video material added to the current existing video material sequence is prior to shooting time of a previous video material in the video material sequence, the total score corresponding to the candidate video material needs to be lowered, so as to reduce a situation in which shooting time in the video material sequence is in a reverse sequence as much as possible.

Optionally, after the video material sequence is obtained, deduplication is performed on the video material sequence to avoid a situation in which a same video material appears in the video material sequence for many times.

In addition, a video description of the target video file may be further obtained by using a video description model based on the video material sequence. This is not described herein again.

Corresponding to the video generation method in the above-mentioned embodiments, Fig. 4 is a structural block diagram of a video generation apparatus according to an embodiment of the present disclosure. For ease of illustration, only parts related to this embodiment of the present disclosure are shown. Referring to Fig. 4, the video generation apparatus 400 includes: a script obtaining unit 401, a text encoding unit 402, a video encoding unit 403, a matching unit 404, and a video packaging unit 405.

The script obtaining unit 401 is configured to obtain a video script.

The text encoding unit 402 is configured to obtain a text feature of the video script.

The video encoding unit 403 is configured to obtain a video feature of each of a plurality of video materials.

The matching unit 404 is configured to obtain a similarity matrix between the text feature and the video feature, and perform matching between the video material and the video script based on the similarity matrix, to obtain a video material sequence.

The video packaging unit 405 is configured to generate a target video file based on the video material sequence.

In one or more embodiments of the present disclosure, when obtaining the text feature of the video script, the text encoding unit 402 is configured to:
encode the video script by using a text encoder, to obtain the text feature of the video script.

In one or more embodiments of the present disclosure, when obtaining the video script, the script obtaining unit 401 is configured to:
receive text data of a video script input by a user, and obtain the video script based on the text data of the video script; and/or
receive a reference video input by a user, obtain description information of the reference video, and obtain the video script based on the description information of the reference video.

In one or more embodiments of the present disclosure, when obtaining the description information of the reference video, the script obtaining unit 401 is configured to:
slice the reference video to obtain a plurality of video segments, and obtain description information of each video segment by using a video description model.

In one or more embodiments of the present disclosure, when obtaining the video script, the script obtaining unit 401 is configured to:
perform sentence splitting on the text data of the video script and/or the description information of the reference video to obtain a plurality of sentences, and determine each sentence as the video script; or
perform sentence splitting on the text data of the video script and/or the description information of the reference video to obtain a plurality of sentences, retrieve a preset video script related to each sentence from a preset script library, and determine the preset video script as the video script; or
perform sentence splitting on the text data of the video script and/or the description information of the reference video to obtain a plurality of sentences, retrieve a preset video script related to each sentence from a preset script library in response to the number of the sentences being less than a preset value, and determine the sentence and the preset video script as the video script.

In one or more embodiments of the present disclosure, the preset script library includes a first-level preset video script and a second-level preset video script, where the first-level preset video script is associated with at least one second-level preset video script. When retrieving the preset video script related to each sentence from the preset script library, the script obtaining unit 401 is configured to:
retrieve a target first-level preset video script related to each sentence from the preset script library, obtain a target second-level preset video script associated with the target first-level preset video script, and determine the target first-level preset video script and the target second-level preset video script as the preset video script related to each sentence.

In one or more embodiments of the present disclosure, when retrieving the preset video script related to each sentence from the preset script library, the script obtaining unit 401 is configured to:
encode the sentence by using the text encoder, to obtain a text feature of the sentence;
encode a preset video script in the preset script library by using the text encoder, to obtain a text feature of the preset video script; and
determine, based on the text feature of the sentence and the text feature of the preset video script, the preset video script related to the sentence.

In one or more embodiments of the present disclosure, when obtaining the video feature of each of the plurality of video materials, the video encoding unit 403 is configured to:
for any video material, extract a plurality of video frames, encode the video frames by using a video encoder, to obtain a feature of each video frame, and perform average pooling on the feature of each video frame to obtain the video feature of the video material.

In one or more embodiments of the present disclosure, when obtaining the similarity matrix between the text feature and the video feature, the matching unit 404 is configured to:
obtain at least two of the following similarities between a text feature of any video script and the video feature of any video material:
a similarity between the text feature of the video script and the video feature of the video material, a similarity between the video feature of the video material and each word of the video script, a similarity between the text feature of the video script and the feature of each video frame of the video material, an average value of a maximum similarity between each video frame of the video material and words of the video script, and an average value of a maximum similarity between each word of the video script and the video frames of the video material; and
perform weighted summation on the at least two similarities to obtain a similarity between the text feature of the any video script and the video feature of the any video material, to construct the similarity matrix.

In one or more embodiments of the present disclosure, when performing matching between the video material and the video script based on the similarity matrix, to obtain the video material sequence, the matching unit 404 is configured to:
obtain, by using a beam search algorithm based on the similarity matrix, the video material sequence matched with the video script.

In one or more embodiments of the present disclosure, when obtaining, by using the beam search algorithm, the video material sequence matched with the video script, the matching unit 404 is configured to:
during determining of each video material in the video material sequence by using the beam search algorithm, compare shooting time of a candidate video material with shooting time of a previous video material in the video material sequence; and
in response to shooting time of any candidate video material being prior to the shooting time of the previous video material in the video material sequence, lower a score of the candidate video material.

In one or more embodiments of the present disclosure, when generating the target video file based on the video material sequence, the video packaging unit 405 is configured to:
add at least one of the following to the video material sequence by using a preset video packaging model: music, an effect, a transition, an animation, or a text, to generate the target video file; or
obtain a video template for the video material sequence, and perform video packaging on the video material sequence based on the video template, to generate the target video file.

The video generation apparatus provided in this embodiment may be configured to perform the technical solution of the above-mentioned method embodiment. The implementation principle and technical effects thereof are similar, and are not described herein again in this embodiment.

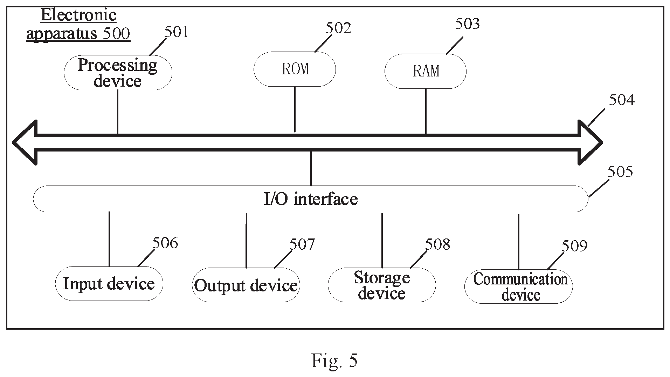

Fig. 5 is a schematic structural diagram of an electronic apparatus 500 suitable for implementing an embodiment of the present disclosure. The electronic apparatus 500 may be a terminal apparatus or a server. The terminal apparatus may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic apparatus shown in Fig. 5 is merely an example, and shall not impose any limitation on the function and scope of use of the embodiments of the present disclosure.

As shown in Fig. 5, the electronic apparatus 500 may include a processing device (for example, a central processing unit or a graphics processing unit) 501 that may perform a variety of appropriate actions and processing based on a program stored in a read-only memory (ROM) 502 or a program loaded from a storage device 508 into a random-access memory (RAM) 503. The RAM 503 further stores various programs and data required for the operation of the electronic apparatus 500. The processing device 501, the ROM 502, and the RAM 503 are connected to one another through a bus 504. An input/output (I/O) interface 505 is also connected to the bus 504.

Generally, the following device may be connected to the I/O interface 505: an input device 506 including, for example, a touchscreen, a touchpad, a keyboard, a mouse, a camera, a microphone, an accelerometer, and a gyroscope; an output device 507 including, for example, a liquid crystal display (LCD), a speaker, and a vibrator; the storage device 508 including, for example, a magnetic tape and a hard disk drive; and a communication device 509. The communication device 509 may allow the electronic apparatus 500 to perform wireless or wired communication with other apparatuses to exchange data. Although Fig. 5 shows the electronic apparatus 500 having various devices, it should be understood that it is not required to implement or have all of the shown devices. It may be an alternative to implement or have more or fewer devices.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication device 509, installed from the storage device 508, or installed from the ROM 502. When the computer program is executed by the processing device 501, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, devices, or members, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, device, or member. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may alternatively be any computer-readable medium other than the computer-readable storage medium. The computer-readable signal medium can send, propagate, or transmit a program used by or in combination with an instruction execution system, device, or member. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic apparatus. Alternatively, the computer-readable medium may exist independently, without being assembled into the electronic apparatus.

The above-mentioned computer-readable medium carries one or more programs that, when executed by the electronic apparatus, cause the electronic apparatus to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic apparatus (CPLD), and the like.

In the context of the present disclosure, a machine-readable medium may be a tangible medium that may contain or store a program used by or in combination with an instruction execution system, device, or apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage apparatus, a magnetic storage apparatus, or any suitable combination thereof.

In a first aspect, according to one or more embodiments of the present disclosure, a video generation method is provided. The method includes:
obtaining a video script, and obtaining a text feature of the video script;
obtaining a video feature of each of a plurality of video materials;
obtaining a similarity matrix between the text feature and the video feature;
performing matching between the video material and the video script based on the similarity matrix, to obtain a video material sequence; and
generating a target video file based on the video material sequence.

According to one or more embodiments of the present disclosure, obtaining the text feature of the video script includes:
encoding the video script by using a text encoder, to obtain the text feature of the video script.

According to one or more embodiments of the present disclosure, obtaining the video script includes:
receiving text data of a video script input by a user, and obtaining the video script based on the text data of the video script; and/or
receiving a reference video input by a user, obtaining description information of the reference video, and obtaining the video script based on the description information of the reference video.

According to one or more embodiments of the present disclosure, obtaining the description information of the reference video includes:
slicing the reference video to obtain a plurality of video segments, and obtaining description information of each video segment by using a video description model.

According to one or more embodiments of the present disclosure, obtaining the video script includes:
performing sentence splitting on the text data of the video script and/or the description information of the reference video to obtain a plurality of sentences, and determining each sentence as the video script; or
performing sentence splitting on the text data of the video script and/or the description information of the reference video to obtain a plurality of sentences, retrieving a preset video script related to each sentence from a preset script library, and determining the preset video script as the video script; or
performing sentence splitting on the text data of the video script and/or the description information of the reference video to obtain a plurality of sentences, retrieving a preset video script related to each sentence from a preset script library in response to the number of the sentences being less than a preset value, and determining the sentence and the preset video script as the video script.

According to one or more embodiments of the present disclosure, the preset script library includes a first-level preset video script and a second-level preset video script, where the first-level preset video script is associated with at least one second-level preset video script. Retrieving the preset video script related to each sentence from the preset script library includes:
retrieving a target first-level preset video script related to each sentence from the preset script library, obtaining a target second-level preset video script associated with the target first-level preset video script, and determining the target first-level preset video script and the target second-level preset video script as the preset video script related to each sentence.

According to one or more embodiments of the present disclosure, retrieving the preset video script related to each sentence from the preset script library includes:
encoding the sentence by using the text encoder, to obtain a text feature of the sentence;
encoding a preset video script in the preset script library by using the text encoder, to obtain a text feature of the preset video script; and
determining, based on the text feature of the sentence and the text feature of the preset video script, the preset video script related to the sentence.

According to one or more embodiments of the present disclosure, obtaining the video feature of each of the plurality of video materials includes:
for any video material, extracting a plurality of video frames, encoding the video frames by using a video encoder, to obtain a feature of each video frame, and performing average pooling on the feature of each video frame to obtain the video feature of the video material.

According to one or more embodiments of the present disclosure, obtaining the similarity matrix between the text feature and the video feature includes:
obtaining at least two of the following similarities between a text feature of any video script and the video feature of any video material:
a similarity between the text feature of the video script and the video feature of the video material, a similarity between the video feature of the video material and each word of the video script, a similarity between the text feature of the video script and the feature of each video frame of the video material, an average value of a maximum similarity between each video frame of the video material and words of the video script, and an average value of a maximum similarity between each word of the video script and the video frames of the video material; and
performing weighted summation on the at least two similarities to obtain a similarity between the text feature of the any video script and the video feature of the any video material, to construct the similarity matrix.

According to one or more embodiments of the present disclosure, performing matching between the video material and the video script based on the similarity matrix, to obtain the video material sequence includes:
obtaining, by using a beam search algorithm based on the similarity matrix, the video material sequence matched with the video script.

According to one or more embodiments of the present disclosure, obtaining, by using the beam search algorithm, the video material sequence matched with the video script includes:
during determining of each video material in the video material sequence by using the beam search algorithm, comparing shooting time of a candidate video material with shooting time of a previous video material in the video material sequence; and
in response to shooting time of any candidate video material being prior to the shooting time of the previous video material in the video material sequence, lowering a score of the candidate video material.

According to one or more embodiments of the present disclosure, generating the target video file based on the video material sequence includes:
adding at least one of the following to the video material sequence by using a preset video packaging model: music, an effect, a transition, an animation, or a text, to generate the target video file; or
obtaining a video template for the video material sequence, and performing video packaging on the video material sequence based on the video template, to generate the target video file.

In a second aspect, according to one or more embodiments of the present disclosure, a video generation apparatus is provided. The device includes:
a script obtaining unit, configured to obtain a video script;
a text encoding unit, configured to obtain a text feature of the video script;
a video encoding unit, configured to obtain a video feature of each of a plurality of video materials;
a matching unit, configured to obtain a similarity matrix between the text feature and the video feature, and perform matching between the video material and the video script based on the similarity matrix, to obtain a video material sequence; and
a video packaging unit, configured to generate a target video file based on the video material sequence.

According to one or more embodiments of the present disclosure, when obtaining the text feature of the video script, the text encoding unit is configured to:
encode the video script by using a text encoder, to obtain the text feature of the video script.

According to one or more embodiments of the present disclosure, when obtaining the video script, the script obtaining unit is configured to:
receive text data of a video script input by a user, and obtain the video script based on the text data of the video script; and/or
receive a reference video input by a user, obtain description information of the reference video, and obtain the video script based on the description information of the reference video.

According to one or more embodiments of the present disclosure, when obtaining the description information of the reference video, the script obtaining unit is configured to:
slice the reference video to obtain a plurality of video segments, and obtain description information of each video segment by using a video description model.

According to one or more embodiments of the present disclosure, when obtaining the video script, the script obtaining unit is configured to:
perform sentence splitting on the text data of the video script and/or the description information of the reference video to obtain a plurality of sentences, and determine each sentence as the video script; or
perform sentence splitting on the text data of the video script and/or the description information of the reference video to obtain a plurality of sentences, retrieve a preset video script related to each sentence from a preset script library, and determine the preset video script as the video script; or
perform sentence splitting on the text data of the video script and/or the description information of the reference video to obtain a plurality of sentences, retrieve a preset video script related to each sentence from a preset script library in response to the number of the sentences being less than a preset value, and determine the sentence and the preset video script as the video script.

According to one or more embodiments of the present disclosure, the preset script library includes a first-level preset video script and a second-level preset video script, where the first-level preset video script is associated with at least one second-level preset video script. When retrieving the preset video script related to each sentence from the preset script library, the script obtaining unit is configured to:
retrieve a target first-level preset video script related to each sentence from the preset script library, obtain a target second-level preset video script associated with the target first-level preset video script, and determine the target first-level preset video script and the target second-level preset video script as the preset video script related to each sentence.

According to one or more embodiments of the present disclosure, when retrieving the preset video script related to each sentence from the preset script library, the script obtaining unit is configured to:
encode the sentence by using the text encoder, to obtain a text feature of the sentence;
encode a preset video script in the preset script library by using the text encoder, to obtain a text feature of the preset video script; and
determine, based on the text feature of the sentence and the text feature of the preset video script, the preset video script related to the sentence.

According to one or more embodiments of the present disclosure, when obtaining the video feature of each of the plurality of video materials, the video encoding unit is configured to:
for any video material, extract a plurality of video frames, encode the video frames by using a video encoder, to obtain a feature of each video frame, and perform average pooling on the feature of each video frame to obtain the video feature of the video material.

According to one or more embodiments of the present disclosure, when obtaining the similarity matrix between the text feature and the video feature, the matching unit is configured to:
obtain at least two of the following similarities between a text feature of any video script and the video feature of any video material:
a similarity between the text feature of the video script and the video feature of the video material, a similarity between the video feature of the video material and each word of the video script, a similarity between the text feature of the video script and the feature of each video frame of the video material, an average value of a maximum similarity between each video frame of the video material and words of the video script, and an average value of a maximum similarity between each word of the video script and the video frames of the video material; and
perform weighted summation on the at least two similarities to obtain a similarity between the text feature of the any video script and the video feature of the any video material, to construct the similarity matrix.

According to one or more embodiments of the present disclosure, when performing matching between the video material and the video script based on the similarity matrix, to obtain the video material sequence, the matching unit is configured to:
obtain, by using a beam search algorithm based on the similarity matrix, the video material sequence matched with the video script.

According to one or more embodiments of the present disclosure, when obtaining, by using the beam search algorithm, the video material sequence matched with the video script, the matching unit is configured to:
during determining of each video material in the video material sequence by using the beam search algorithm, compare shooting time of a candidate video material with shooting time of a previous video material in the video material sequence; and
in response to shooting time of any candidate video material being prior to the shooting time of the previous video material in the video material sequence, lower a score of the candidate video material.

According to one or more embodiments of the present disclosure, when generating the target video file based on the video material sequence, the video packaging unit is configured to:
add at least one of the following to the video material sequence by using a preset video packaging model: music, an effect, a transition, an animation, or a text, to generate the target video file; or
obtain a video template for the video material sequence, and perform video packaging on the video material sequence based on the video template, to generate the target video file.

In a third aspect, according to one or more embodiments of the present disclosure, an electronic apparatus is provided. The electronic apparatus includes: at least one processor and a memory, where
the memory stores computer-executable instructions; and
the at least one processor executes the computer-executable instructions stored in the memory, to cause the at least one processor to perform the video generation method according to the first aspect and various possible designs of the first aspect.

In a fourth aspect, according to one or more embodiments of the present disclosure, a computer-readable storage medium is provided. The computer-readable storage medium stores computer-executable instructions that, when executed by a processor, cause the video generation method according to the first aspect and various possible designs of the first aspect to be implemented.

In a fifth aspect, according to one or more embodiments of the present disclosure, a computer program product is provided. The computer program product includes computer-executable instructions that, when executed by a processor, cause the video generation method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A video generation method, comprising:
obtaining a video script, and obtaining a text feature of the video script;
obtaining a video feature of each of a plurality of video materials;
obtaining a similarity matrix between the text feature and the video feature;
performing matching between the video material and the video script based on the similarity matrix, to obtain a video material sequence; and
generating a target video file based on the video material sequence.

2. The method according to claim 1, wherein obtaining the text feature of the video script comprises:
encoding the video script by using a text encoder, to obtain the text feature of the video script.

3. The method according to claim 1 or 2, wherein obtaining the video script comprises:
receiving text data of a video script input by a user, and obtaining the video script based on the text data of the video script; and/or
receiving a reference video input by a user, obtaining description information of the reference video, and obtaining the video script based on the description information of the reference video.

4. The method according to claim 3, wherein obtaining the description information of the reference video comprises:
slicing the reference video to obtain a plurality of video segments, and obtaining description information of each of the plurality of video segments by using a video description model.

5. The method according to claim 3 or 4, wherein obtaining the video script comprises:
performing sentence splitting on the text data of the video script and/or the description information of the reference video to obtain a plurality of sentences, and determining each of the plurality of sentences as the video script; or
performing sentence splitting on the text data of the video script and/or the description information of the reference video to obtain a plurality of sentences, retrieving a preset video script related to each of the plurality of sentences from a preset script library, and determining the preset video script as the video script; or
performing sentence splitting on the text data of the video script and/or the description information of the reference video to obtain a plurality of sentences, retrieving a preset video script related to each of the plurality of sentences from a preset script library in response to the number of the plurality of sentences being less than a preset value, and determining the sentence and the preset video script as the video script.

6. The method according to claim 5, wherein the preset script library comprises a first-level preset video script and a second-level preset video script, wherein the first-level preset video script is associated with at least one second-level preset video script, and retrieving the preset video script related to each of the plurality of sentences from the preset script library comprises:
retrieving a target first-level preset video script related to each of the plurality of sentences from the preset script library, obtaining a target second-level preset video script associated with the target first-level preset video script, and determining the target first-level preset video script and the target second-level preset video script as the preset video script related to each of the plurality of sentences.

7. The method according to claim 5 or 6, wherein retrieving the preset video script related to each of the plurality of sentences from the preset script library comprises:
encoding the sentence by using the text encoder, to obtain a text feature of the sentence;
encoding a preset video script in the preset script library by using the text encoder, to obtain a text feature of the preset video script; and
determining, based on the text feature of the sentence and the text feature of the preset video script, the preset video script related to the sentence.

8. The method according to any one of claims 1 to 7, wherein obtaining the video feature of each of the plurality of video materials comprises:
for any of the plurality of video materials, extracting a plurality of video frames, encoding each of the plurality of video frames by using a video encoder, to obtain a feature of each of the plurality of video frames, and performing average pooling on the feature of each of the plurality of video frames to obtain the video feature of the video material.

9. The method according to claim 8, wherein obtaining the similarity matrix between the text feature and the video feature comprises:
obtaining at least two of following similarities between a text feature of any video script and the video feature of any video material:
a similarity between the text feature of the video script and the video feature of the video material, a similarity between the video feature of the video material and each word of the video script, a similarity between the text feature of the video script and the feature of each video frame of the video material, an average value of a maximum similarity between each video frame of the video material and words of the video script, and an average value of a maximum similarity between each word of the video script and the video frames of the video material; and
performing weighted summation on the at least two similarities to obtain a similarity between the text feature of the any video script and the video feature of the any video material, to construct the similarity matrix.

10. The method according to any one of claims 1 to 9, wherein performing matching between the video material and the video script based on the similarity matrix, to obtain the video material sequence comprises:
obtaining, by using a beam search algorithm based on the similarity matrix, the video material sequence matched with the video script.

11. The method according to claim 10, wherein obtaining, by using the beam search algorithm, the video material sequence matched with the video script comprises:
during determining of each video material in the video material sequence by using the beam search algorithm, comparing shooting time of a candidate video material with shooting time of a previous video material in the video material sequence; and
in response to shooting time of any candidate video material being prior to the shooting time of the previous video material in the video material sequence, lowering a score of the candidate video material.

12. The method according to any one of claims 1 to 11, wherein generating the target video file based on the video material sequence comprises:
adding at least one of music, effect, transition, animation, or text to the video material sequence by using a preset video packaging model, to generate the target video file; or
obtaining a video template for the video material sequence, and performing video packaging on the video material sequence based on the video template, to generate the target video file.

13. A video generation apparatus, comprising:
a script obtaining unit, configured to obtain a video script;
a text encoding unit, configured to obtain a text feature of the video script;
a video encoding unit, configured to obtain a video feature of each of a plurality of video materials;
a matching unit, configured to obtain a similarity matrix between the text feature and the video feature, and perform matching between the video material and the video script based on the similarity matrix, to obtain a video material sequence; and
a video packaging unit, configured to generate a target video file based on the video material sequence.

14. An electronic apparatus, comprising: at least one processor and a memory, wherein
the memory stores computer-executable instructions; and
the at least one processor executes the computer-executable instructions stored in the memory, to cause the at least one processor to perform the method according to any one of claims 1 to 12.

15. A computer-readable storage medium storing computer-executable instructions that, when executed by a processor, cause the method according to any one of claims 1 to 12 to be implemented.

16. A computer program product, comprising computer-executable instructions that, when executed by a processor, cause the method according to any one of claims 1 to 12 to be implemented.
